# EUROPEAN PATENT APPLICATION

(11) **EP 4 622 186 A1**
(43) Date of publication of application: **24.09.2025**
(21) Application number: 24165715.4
(22) Date of filing: 22.03.2024
(51) Int. Cl.: H04L 12/40, H04L 61/5038

(54) **WIRED BUS ARBITRATION METHOD**

(71) Applicant: Melexis Technologies NV, 3980 Tessenderlo-Ham (BE)
(72) Inventor: OTT, Andreas, 99099 Erfurt (DE); BERLIT, Kevin, 99099 Erfurt (DE); STURM, Jörgen, 99099 Erfurt (DE); FREITAG, Thomas, 99099 Erfurt (DE)
(74) Representative: Winger

(57) **Abstract**

A method of assigning an address on a wired network comprising at least one commander and a plurality of responders is provided. A value of a subset of bits sent by the commander is compared with the ID of each responder. The responders that find a match send their IDs or a part of their ID. If there is a collision, a new value is sent. If only one responder has a match, the commander assigns that responder a node address which is shorter than the ID.

## Description

### Field of the invention

The present invention relates to the field of network communication protocols, specifically to an arbitration method for assigning addresses to nodes in a wired bus system.

### Background of the invention

In the field of wired bus systems, the coordination and management of communication between various nodes or participants is an important aspect of ensuring efficient and reliable data transfer. These systems are foundational in applications ranging from automotive networks to industrial automation. A common challenge in such networks is the arbitration process, which determines the priority and access rights of each node to the bus for data transmission.

In this context, arbitration is a mechanism that resolves conflicts and prevents data collision when multiple nodes attempt to communicate simultaneously. For example, CAN protocol allows to prioritize a command based on the ID of the node sending the command.

Since multiple nodes simultaneously contribute to the signaling on the bus, reliable bus communication requires integrity of signals on the bus, and maintaining this integrity requires precise timing. To achieve the necessary synchronization among nodes, a highly accurate time base is typically provided by crystal oscillators. These oscillators ensure that all nodes on the network are operating within a tightly controlled frequency tolerance, which is essential for the arbitration process to function correctly.

Despite the reduced timing requirements, there may still be scenarios, such as during the initialization phase of the network, where some form of arbitration is necessary to determine the IDs of the responders. Traditional arbitration methods, which rely on tight oscillator tolerances, would not be suitable in this context due to the potential for timing errors to accumulate and overlap, leading to a loss of the common decision window as the number of transmitted bits increases.

The limitations of existing arbitration methods are evident when considering the oscillator tolerances and the impact on the arbitration process. As the number of transmitted bits grows, the window for a common decision between the commander and responders narrows, eventually leading to a point where the timing errors from the oscillators overlap, and arbitration becomes unreliable.

Given these challenges, there is a clear need for further advancements in the field of wired bus system arbitration. These advancements must address the issues of oscillator tolerance, the need for a unique and interoperable ID system among nodes from different manufacturers, and the requirement for a rapid and efficient arbitration process that does not need expensive hardware or complex protocols. An arbitration method would be desirable if such method can operate effectively with less precise oscillators, and still ensure that each node is uniquely identified and able to communicate effectively on the network.

### Summary of the invention

It is an object of embodiments of the present invention to enable the assignment of unique network addresses to responder devices in a wired bus system with a commander-responder configuration using low-cost oscillators. This objective is accomplished by a method of assigning network addresses to devices connected to a wired bus within a network system according to the invention, and by a network system configured to apply such method.

In a first aspect, a method is provided as set out in the appended claim 1.

It is an advantage of embodiments of the present invention that shortened addresses can be used. It is a further advantage that fast, effective and accurate arbitration is enabled even if the responders comprise oscillators typically less accurate, and thus more inexpensive, than the oscillator of the commander. It is a further advantage that no additional hardware is required.

The commander can finish the sequence of queries if the network addres space is completely filled with assigned network addresses and no collision is detected. In embodiments of the presence invention wherein the commander has information of the number of responders in the network, the method may stop once the commander assigns addresses to the each responder in the network.

In embodiments, transmitting at least part of the identification number by the responder may comprise transmitting a bit, a nibble or a byte of its identification number. This embodiment provides the advantage of flexibility in the granularity of the identification process, allowing for efficient data transmission based on the network's needs. Thus, arbitration time can be reduced since there is no need to transmit more than a few bits rather than a long sequence or the whole ID number.

In embodiments, transmitting the message by the commander may comprise transmitting a field indicating whether the responder shall transmit a nibble or a byte of its identification number. This embodiment offers the advantage of allowing the commander to control the level of detail required from the responders, optimizing the arbitration process.

In embodiments, the transmission of the identification number may be done with a bit or with a nibble, further wherein the transmission is switched to the use of bytes, if the number of collisions detected during assignment of multiple responders surpasses a predetermined threshold. This embodiment has the advantage of dynamically adjusting the arbitration process to reduce the likelihood of collisions, thereby improving network efficiency. Advantageously, arbitration can be done in a flexible way.

In embodiments, the responder that finds a match may further transmit a Cyclic Redundance Check (CRC) value, optionally further wherein the commander checks for collisions in reference to the Cyclic Redundance Check value. This embodiment provides the advantage of enhanced error detection, ensuring the integrity of the arbitration process.

In embodiments, transmitting at least a value representative of a subset of bits of the ID space may comprise selecting from a portion of the ID space with high entropy. This embodiment has the advantage of reducing the probability of collisions by focusing on the most unique parts of the identification numbers.

In embodiments, the addresses may be assigned to each responder of the network the first time the network powers up, optionally every time the network powers up. This embodiment offers the advantage of ensuring that addresses are always up-to-date and reflect the current network configuration.

In embodiments, the method may further comprise memorizing an identification number received by the commander. This embodiment provides the advantage of allowing the commander to maintain a record of known responders, facilitating efficient communication and management of the network. Since the node address (NAD) of a responder can be used for addressing a responder in a communication protocol, rather than the ID of the responder, the ID field in a communication frame can be shortened.

In embodiments, the address received by the responder may be stored in a memory. This embodiment has the advantage of ensuring that the responder retains its assigned address even if the network is disrupted or the responder is temporarily disconnected. If the memory is non-volatil, it is an advantage of embodiments of the present invention that arbitration can be done only once, at the first power up. In embodiments wherein the memory is a volatile memory (e.g. a RAM), it is an advantage of embodiments of the present invention that readdressing of the responders can be done easily, e.g. at each power up. It is an advantage that the nodes may comprise inexpensive volatile memories, which gives a cost advantage.

Independently on the type of memory, the method allows readdressing. It is an advantage that the method allows reconfiguration of the network if e.g. the bus changes the number of responders connected thereto.

In embodiments, the addresses may be obtained from a network addressing space comprising 256 or less addresses. This embodiment provides the advantage of a simplified addressing scheme suitable for small to medium-sized networks.

In some embodiments, sending the value representative of a subset of bits of the ID space comprises sending a value in one or more positions of the ID space in a sequence. For the first position of the ID space, the value corresponding to the first position is sent. For the n-th position of the ID space, the value for the n-th position and for each position below n are sent. It is an advantage that collisions can be resolved in a dynamic way, and only if they occur.

In embodiments, the network addressing space may comprise 4 addresses reserved as broadcast addresses for all the receivers. This embodiment offers the advantage of enabling the commander to send messages to all responders simultaneously, improving the efficiency of network-wide communications.

In embodiments, the commander may receive and/or store the number of responders connected to its network and provide a set of network addresses with the same number of addresses as the number of responders. This embodiment has the advantage of ensuring that the network addressing space is optimally utilized and that each responder is uniquely identifiable. The commander can provide a NAD space tailored to the particular network the commander is connected to.

In the second aspect, the present invention relates to a system as set out in the appended claim 13.

It is an advantage of embodiments of the present invention that the system can undergo arbitration for a short period, e.g. few milliseconds. It is a further advantage that the responders may comprise oscillators typically less accurate, and thus more inexpensive, than the oscillator of the commander. It is a further advantage that no additional hardware is required.

In embodiments, the responder may comprise a semiconductor processing chip, wherein the identification number comprises a lot number of a semiconductor wafer lot, and/or the coordinates of the position of the chip in the wafer. This embodiment provides the advantage of leveraging manufacturing data to create unique identification numbers, enhancing the robustness of the arbitration process. The reliability of the system is improved.

In embodiments, at least one responder may comprise an oscillator less accurate than the oscillator of the commander. This embodiment offers the advantage of allowing the use of less expensive components in the responders (e.g. RC oscillators, rather than e.g. crystal oscillators) without compromising the effectiveness of the arbitration method.

It is an advantage of embodiments of the present invention that a method for assigning addresses on a network with a commander and multiple responders connected to a wired bus can be implemented, where each responder has a unique identification number that contributes to a larger ID space, while the network addressing space remains smaller and more manageable. It is a further advantage of embodiments of the present invention that the arbitration process can be initiated by the commander sending a query with a value representative of a subset of bits from the ID space, which the responders receive and check for a match, thereby streamlining the arbitration process. It is an additional advantage of embodiments of the present invention that responders finding no match remain receptive for further values, ensuring that all responders have the opportunity to be addressed. It is yet another advantage of embodiments of the present invention that responders with a matching subset of bits can transmit at least a part of their identification number on the bus, facilitating their unique identification by the commander.

It is an advantage of embodiments of the present invention that the commander is configured or programmed to check for collisions on the identification numbers received, allowing for a robust arbitration process. It is a further advantage of embodiments of the present invention that upon successful identification without collision and address assignation, the identified responder ceases to be receptive to further queries, optimizing the arbitration sequence. It is an additional advantage of embodiments of the present invention that the method allows for the transmission of identification numbers in various sizes, such as a bit, a nibble, or a byte, providing flexibility in the arbitration process.

It is an advantage of embodiments of the present invention that the method can include switching from transmitting identification numbers in smaller units to larger units, or vice-versa, if the number of collisions during the assignment process does not reach a minimum threshold thus allowing larger granularity and speeding arbitration, or if the number of collisions exceeds a predetermined threshold to reduce the number of collisions thereby improving the efficiency of the arbitration process. It is an advantage of some embodiments of the present invention that responders can transmit a CRC value along with their identification number, and the commander can use this for collision detection, further ensuring the integrity of the arbitration process.

It is an advantage of embodiments of the present invention that the method selects values from portions of the ID space with high entropy, which can lead to a more efficient and quicker arbitration process. It is an advantage of embodiments of the present invention that addresses can be assigned to each responder upon network power-up, ensuring a reliable network initialization. This can be done for the first time only, or in subsequent power-ups. It is an advantage of embodiments of the present invention that the method includes the memorization of identification numbers by the commander, which can be used for efficient network management and future reference.

It is an advantage of embodiments of the present invention that the addresses received by the responders are stored in memory, providing stability and consistency in the network addressing. It is an advantage of embodiments of the present invention that the network addressing space can be limited to a practical number, such as 256 or fewer addresses, making the system suitable for a wide range of applications. It is an advantage of embodiments of the present invention that the network addressing space can include reserved broadcast addresses, allowing for efficient communication to all responders simultaneously.

In some embodiments, the assigned node addresses may be short, in other words they may include fewer bits than the identification number, thus reducing the time and frame size required to address a particular responder by addressing it using its assigned NAD address.

It is an advantage of embodiments of the present invention that the commander is capable of receiving and storing the number of responders connected to the network and providing a set of network addresses that matches the number of responders, ensuring that each responder is uniquely addressed. It is an advantage of embodiments of the present invention that the system is adapted for processing a frame protocol for arbitration, where each responder is capable of transmitting at least a portion of its own identification number, contributing to a reliable and efficient arbitration process.

It is an advantage of embodiments of the present invention that the responder can include means to transmit on the bus an identification number, for example the responder may comprise a semiconductor processing chip with an identification number that comprises a lot number of a semiconductor wafer lot and/or the coordinates of the chip's position on the wafer, ensuring a unique and traceable identification system. Since the present invention provides means to address nodes without using CAN arbitration, it is an advantage of embodiments of the present invention that at least one responder can comprise an oscillator that is less accurate than the oscillator of the commander, allowing for cost-effective implementation without compromising the arbitration process.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a timing diagram of a classic CAN arbitration method.
Fig. 2 is a schematic flowchart of steps in the arbitration method according to embodiments of the present invention.
Fig. 3 is a flow chart illustrating the arbitration method according to embodiments of the present invention.
Fig. 4 shows a legend of the flowchart in Fig. 5.
Fig. 5 is a flowchart corresponding to the legend shown in Fig. 4 detailing interactions between the commander and responders during the arbitration process according to embodiments of the present invention.

In the different figures, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top and over and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", also used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be interpreted as being limited to devices consisting only of components A and B. It means that with respect to the present invention, the only relevant components of the device are A and B. The term "comprising" therefore covers the situation where only the stated features are present and the situation where these features and one or more other features are present. The word "comprising" according to the invention therefore also includes as one embodiment that no further components are present. When the word "comprising" is used to describe an embodiment in this application, it is to be understood that an alternative version of the same embodiment, wherein the term "comprising" is replaced by "consisting of", is also encompassed within the scope of the present invention.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

As used herein, and unless otherwise specified, the term "commander" refers to a device or component within a network that is responsible for managing communication and control operations, including but not limited to assigning network addresses to other devices within the network. Examples of specific embodiments of a commander may include a network controller, a commander device (master device) in a commander-responder configuration, or a central processing unit within a distributed control system.

As used herein, and unless otherwise specified, the term "responders" refers to devices or components within a network that are subordinate to the commander and are capable of receiving instructions, queries, or commands from the commander and responding accordingly. Each responder is equipped with a unique identification number for identification purposes within the network. Examples of specific embodiments of responders may include slave devices in a commander-responder configuration, sensor nodes in a sensor network, or peripheral devices in a computer network.

In some embodiments, the hardware implementation of the commander and responders may not be different from each other. For example, all nodes in the bus may be equipped with similar controllers and/or processing units, input/output, electronic units and devices, wherein one of the nodes is configured, e.g. programmed, to execute the functions of a commander. For example, the rest of the nodes may be configured or programmed to execute functions of a responder.

As used herein, and unless otherwise specified, the term "semiconductor processing chip" refers to an electronic component fabricated from a semiconductor material, e.g. silicon, that is designed to perform computational or control tasks within an electronic device. Examples of specific embodiments of semiconductor processing chips may include microprocessors, microcontrollers, or application-specific integrated circuits (ASICs).

As used herein, and unless otherwise specified, the term "wired bus" refers to a physical communication pathway that allows for the transmission of electrical signals between the commander and responders in a network. This pathway is characterized by being a hardwired connection, as opposed to a wireless link. Examples of specific embodiments of a wired bus may include a Controller Area Network (CAN) bus , and other buses, e.g. an Inter-Integrated Circuit (I²C) bus, or a Serial Peripheral Interface (SPI) bus. In general, the method in embodiments of the present invention can be used in any commander-responder (master-slave) network with a bidirectional communication, including proprietary networks such as e.g. MeLiBu.

As used therein, an identification number is a number used to identify a particular device or, in the case of the present invention, a responder. In principle, each identification number identifies a unique device, therefore the identification number is also unique. Examples of specific embodiments of identification numbers may include serial numbers, MAC addresses, or unique identifiers embedded during manufacturing. An identification number may comprise for example the lot number of a semiconductor wafer lot, coordinates of the position of a particular chip of a wafer, etc. If the identification of a responder includes information regarding the manufacture of a chip included in said responder, then this might also be part of the identification number.

As used herein, and unless otherwise specified, the term "lot number of a semiconductor wafer lot" refers to a unique identifier assigned to a batch or group of semiconductor wafers during the manufacturing process, which is used for tracking and quality control purposes. Examples of specific embodiments of lot numbers may include alphanumeric codes that indicate the production date, factory location, or batch sequence.

As used herein, and unless otherwise specified, the term "coordinates of the position of the chip in the wafer" refers to the specific location of a semiconductor chip on the original semiconductor wafer from which it was cut or separated during the manufacturing process. These coordinates are typically expressed in terms of a grid or matrix position. Examples of specific embodiments of coordinates may include a notation such as "Row 5, Column 8" or a numerical code that maps to a particular location on the wafer.

As used herein, and unless otherwise specified, the term "identification number of a predetermined length" refers to a unique numeric or alphanumeric code assigned to each responder, which has a fixed number of digits or characters. In some embodiments, the length of this identification number is pre-established and consistent across all responders within the network. However, the length may be different in different responders.

As used herein, and unless otherwise specified, the term "ID space" refers to the entire range or set of possible identification numbers that can be assigned to responders within a network, based on the predetermined length of the identification numbers. The ID space encompasses all potential combinations of digits or characters that form the identification numbers. Examples of specific embodiments of an ID space may include a numerical range from 0000 to 9999 for a four-digit identification number or a hexadecimal range from 0000 to FFFF for a 16-bit identification number.

As used herein, and unless otherwise specified, the term "network addressing space" refers to the range or set of addresses that can be assigned to responders within a network for the purpose of communication and identification. The network addressing space is typically smaller than the ID space, meaning that there are fewer available network addresses than there are potential identification numbers. Examples of specific embodiments of a network addressing space may include a range of IP addresses within a subnet or a set of device addresses within a local area network (LAN). A network address also comprises less characters than an ID address in general, so a network address occupies less memory and takes less time to transmit than an ID address.

As used herein, and unless otherwise specified, the term "query of a sequence thereof" refers to a series of inquiries or requests for information initiated by the commander and directed towards the responders, where each query is part of a sequential process aimed at identifying and addressing each responder. Examples of specific embodiments of a query sequence may include a series of binary searches, a step-by-step interrogation process, or a sequential polling mechanism.

As used herein, and unless otherwise specified, the term "value representative of a subset of bits of the ID space" refers to a numerical or binary value that corresponds to a particular portion or selection of bits from the range of bits that make up the identification numbers within the ID space. This value is used by the commander to query responders in a way that narrows down the identification process. Examples of specific embodiments of such a value may include a binary code that represents the first four bits of an eight-bit identification number or a hexadecimal digit that corresponds to a specific nibble within a 16-bit identifier.

As used herein, and unless otherwise specified, the term "collision" refers to an event that occurs when two or more responders transmit their identification numbers or parts thereof simultaneously in response to a query from the commander, resulting in a conflict or overlap of signals on the bus that prevents the commander from clearly identifying the individual responders. In the present invention, the responders make the transmission and the commander checks whether there is a collision. In some embodiments, the responder completes the transmission of its ID before the commander checks whether or not there is a collision.

As used herein, and unless otherwise specified, the term "Cyclic Redundancy Check value" or simply "CRC value" refers to a numerical value generated by applying a CRC algorithm to a block of data, which in this context is the identification number or a part of it. This value is used to detect errors in the transmission of the data. Examples of specific embodiments of CRC values may include an 8-bit checksum used for error checking in a communication protocol. In some embodiments the CRC value is always calculated on the value (e.g. on the byte or nibble) to be transmitted, to check that the communication channel did not introduce any errors. It is an advantage, that any communication problems are seen immediately. This is not the only possibility, since the CRC value might be calculated for a number of values to be transmitted and then send or tested as separate number. This advantageously unloads the bandwidth, however any communication errors might be detected late, so later corrections may be necessary.

The CRC is calculated to the payload to be transmitted, the data lenght of the CRC has to be selected on the length of the payload data and the error detection properties of the CRC polynomial. This known in the art. In embodiments, the data length may follow the CRC-16-CCITT.

As used herein, and unless otherwise specified, the term "high entropy" in the context of selecting from a portion of the ID space refers to choosing a subset of bits that have a high degree of randomness or unpredictability, which helps to minimize the likelihood of collisions during the address assignment process. Examples of specific embodiments of high entropy selections may include using a random number generator to select bits or employing cryptographic techniques to ensure a non-repetitive and non-predictable pattern.

As used herein, and unless otherwise specified, the term "broadcast addresses" refers to special network addresses that are reserved for sending messages to all responders simultaneously, rather than to a single specific responder. Examples of specific embodiments of broadcast addresses may include the IP address 255.255.255.255 in an IPv4 network or a specific CAN bus identifier used for broadcasting messages to all nodes on the bus.

As used herein, and unless otherwise specified, the term "oscillator less accurate than the oscillator of the commander" refers to a timing component within a responder that generates a periodic signal with a frequency or stability that is less precise than the frequency or stability of the signal generated by the oscillator within the commander. This difference in accuracy may affect the synchronization of communications between the commander and the responder. Examples of specific embodiments of oscillators with varying accuracy may include crystal oscillators with different tolerance levels or resonators with different temperature coefficients.

The invention will now be described by a detailed description of several embodiments of the invention. It is clear that other embodiments of the invention can be configured according to the knowledge of persons skilled in the art without departing from the technical teaching of the invention. The invention is limited only by the terms of the appended claims.

The invention relates to communication between nodes in electric networks with multiple devices connected. These networks can be typically used in, for example, lighting systems in transport applications such as automobiles, but it could be applied to security systems or any other system which requires reliable coordination of several electronic devices. Nodes in general may comprise electronics such as controllers, bus processing units, etc. Nodes may comprise or be connected to electronic devices to be controlled, e.g. powered as required.

Control of the nodes in the bus may be centralized by a commander which sends information and/or requests to the nodes, and may control them. Bus communication can be very complex taking into account the type of data, number of commands and information that may be sent at any time through the bus.

A particular example for lighting systems may be a driving unit connected to a light source such as an LED system, such as an RGB unit or the like. The activation of the sources in a particular pattern, intensity, color, etc. requires a detailed and reliable communication and synchronicity between the commander and the responder, to ensure proper control, e.g. proper activation of the required light sources.

The Controller Area Network (CAN) is a well-known example of a system that employs a sophisticated arbitration scheme. In CAN networks, each message is assigned a unique identifier (ID), which is used to prioritize messages and resolve bus access conflicts. The arbitration process in CAN is deterministic and relies on the principle that lower ID values have higher priority.

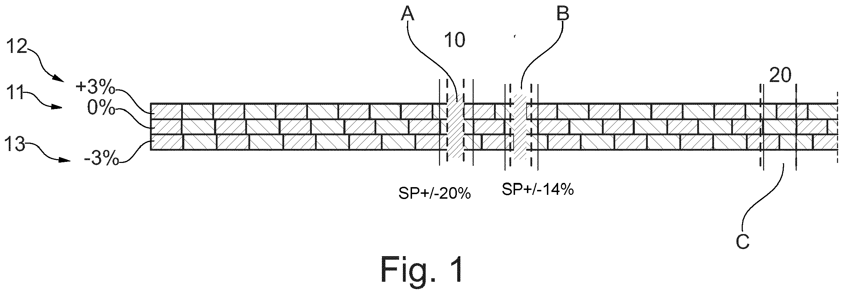

FIG. 1 depicts the timing diagram of a classic CAN arbitration method and highlights the challenges of maintaining a common decision window with oscillators of +/-3% tolerance.

The middle timing for the commander 11 is sandwiched by the timing diagram of a 'fast' responder 12, with a timing tolerance of +3% relative to the commander, and a 'slow' responder 13, with a timing tolerance of -3% relative to the commander. The common decision window decreases with time. Approximately at half the transmission time of the 20th bit by the commander, the 'fast' responder finishes transmitting the 20th bit, and the 'slow' responder starts transmitting the same. Thus, after transmission of 19 bits, the tolerance errors overlap between the responders and commander, and there is no common decision window anymore, see the overlap C at the bit 20th. In other words, the common decision window decreases with the number of bits to be transmitted.
- In a first option, the responder synchronizes on a start bit that is sent by the commander. In this case, the stop bit at the 10th position has an opening for a common decision window A on +/-20% of the sample point SP (referred to the commander) from the center (calculated by 100-2(10*3%) = 40% , thus from 20% to -20%). Looking at the fast and slow responder, it becomes clear that a single sample point (SP) is not enough. The fast responder requires the SP in the second half of the bit, while a slow responder requires it in the first half. But a responder does not know its frequency dispersion compared to the commander or other responders, if no dedicated hardware is available.
- In a second option, the responder synchronizes to the last commander stop bit (hard sync). In this case, the 12th bit position matters. The same constraints as in the previous case are valid also here, just the common decision window B is reduced to +/-14% around the SP referred to the commander (from 100%-2*(12*3%) being 28%, thus from 14% to -14%).

In an effort to address the limitations of synchronous arbitration in CAN-like networks, an alternative arbitration method suitable for a MeLiBu bus system is developed, which is characterized by a commander (master) and multiple responders (slaves). The aim was to establish a reliable arbitration process that could operate with high tolerance to inaccuracies introduced by inexpensive oscillators. A network can be built wherein the nodes may include, for example, RC oscillators rather than having to include crystal oscillators or other high-end, expensive oscillators, in the responders of the network. For example, the oscillators used in a network implementing a method in accordance with embodiments of the present invention may have a tolerance of less than +/- 5%, for example +/-3%, thereby reducing the cost and complexity of the system.

The MeLiBu bus system is a bidirectional communication system between one commander (master) and multiple responders (slaves), so it does not require to follow the high timing requirements and standards of the CAN arbitration for its communication processes. Since the commander initiates all communications, the timing accuracy demands between the commander and responders are less stringent, with typical oscillator frequency tolerances of around +/-3% being acceptable.

The wired bus includes a commander node, or commander for short, and multiple responder nodes, or responder for short. Each responder is identified by an identification number (ID), which is unique for each responder.

The commander may transmit an instruction to a responder which needs to be properly addressed. This is a major issue since the commander needs to somehow link the identity of the responder with an address. First, it is necessary to somehow program the commander with the list of nodes connected to the network, its characteristics and addresses.This is not always possible, because different parts of the network may originate from a different manufacturer, with different code conventions to identify the parts. Further, the address provided to the responders may be unnecessarily long, which delays data transmission. The addresses may also need to be updated, in case of e.g. connecting new nodes to the bus, exchanging faulty parts, etc.

The present invention provides a flexible method and a network system which can address in a fast and effective manner each responder. The present invention allows not only assigning and memorizing addresses in a network effectively, but also fast addressing while the network is in use.

The arbitration method is designed to assign network addresses (NADs) to each responder. In some embodiments the NADs are significantly shorter than the unique chip IDs, so when the commander needs to address a specific responder, the responder address takes fewer bits in the communication frame.

In a first aspect, the method may be a method of assigning addresses to responders in a wired bus. The method can be implemented as an algorithm which can be programmed in each responder and in the commander. The method comprises the commander sending at least a value corresponding to different positions within the ID space, starting with the position most likely to vary (usually the lowest few positions of the ID, for example the lowest byte, nibble, or bit). Responders compare the received value with their own ID, for example with the value at the same position of their own ID, and respond if there is a match. For example, the responder may transmit a message to the commander. In some embodiments the responder transmits at least a part of their ID, for example its complete ID. The commander then checks for collisions by data verification. This can be done e.g. by comparing the incoming data against expected data. In some embodiments, a cyclic redundancy check is performed, so the commander checks for collisions by e.g. verifying the CRC. If a collision is detected, the commander queries a value corresponding to the next position in the ID. If no collision occurred, the responder is assigned a NAD.

Shortened addresses can be used as NADs, instead of the relatively long IDs, shortening the parts of the communication frames dedicated to addresses and thus speeding up communication. It is a further advantage that fast, effective and accurate arbitration is enabled even if the responders comprise oscillators typically less accurate, and thus more inexpensive, than the oscillator of the commander. The method can be applied with programmed processors, so no additional hardware is required. The number of NADs may form a NAD space much smaller than the ID space. The NAD space can be advantageously tailored to the number of responders in the bus, if the commander has access to that information.

The responders comprise an ID that should be unique as explained earlier. In some embodiments, a portion of the ID is set to include a unique number per vendor, and the length of each vendor number is equal. The ID is also set so that the length of the complete ID is equal for all the vendors. In some embodiments, the code convention provided by each vendor is used per device in order to provide a unique ID on each responder, even if they originate from the same vendor. The wafer lot number, wafer number, and/or position of the IC of the responder in the wafer, and a combination thereof, are only one example.

Since the IDs may originate from different manufacturers, the length of the IDs is not necessarily the same. In some embodiments, the commander may receive information including a limit of an ID has been reached. In some embodiments, if an ID limit has been reached, the remaining sequence of bits may be a string of zeros. Thus, the method can be applied to devices irrespective of their origin. In some embodiments, a part of the ID can be assigned to a vendor name, e.g. 1 or 2 bytes, which allows using different versions and variants of nodes in a network from a single manufacturers' portfolio.

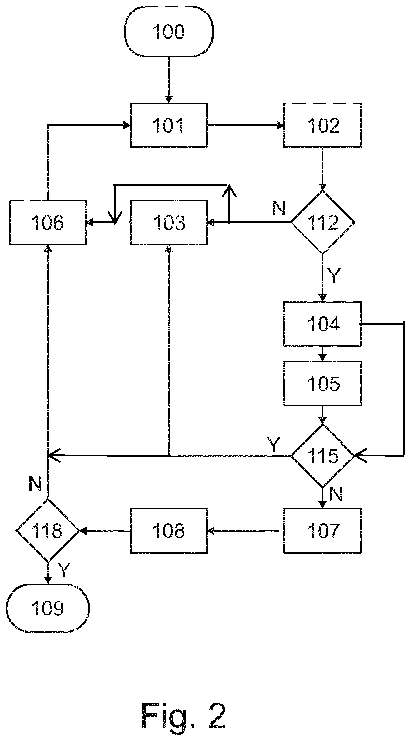

FIG. 2 provides a schematic flowchart of the steps of the method of assigning addresses. The method can be applied the first time the network is powered up (or advantageously when the network changes, e.g. if a responder is substituted, added or removed). If the assigned NADs can be memorized in the nodes, e.g. by use of non-volatile memory, then the method may be applied only once for the responders present on the bus, which remain assigned with NADs unless reassigned later. Alternatively, the method can be applied every time the network is powered up, allowing volatile memories.

The method of applying node addresses starts 100 with the commander sending 101 through the bus a value representing a subset of bits of the ID space to all responders connected to the subset.

In some embodiments, starting 100 can be done by a broadcasting command to all responders, instructing them to enter in arbitration mode. The commander can be programmed to broadcast this command, in which case the responders should already be programmed to respond to said command.

In some embodiments, starting 100 can be initiated by the responders. For example, the responders may be configured to find a NAD in their memory, e.g. a non-volatile (NV) memory, for example after power up or if requested. If the responders do not find a stored NAD, then they can ask to start the assignment process.

Regarding the commander identification, instead of sending each ID through the bus, only a subset of the ID may be sent through the bus. The subset of the ID may be smaller than the whole ID. The responders receive 102 the value from the bus and check for a match, for example each responder may compare the value with a relevant part of its own ID. The portion to be checked may be determined by the commander or may be programmed in the responder.

In some embodiments, the responders may be instructed or adapted to compare (or check) the value with a portion of the ID with high entropy. This means that the portion to be compared tends to be different between different responders, advantageously reducing the number of collisions by design. This may include a portion with the position in x, y of a wafer where the electronic circuit is formed, where circuits from a batch differ from each other the most, for example, the present invention not being limited thereto.

In the checking 112, if a responder does not find a match, the responder remains 103 receptive for a further value through the bus. If no responder finds a match, the commander cannot assign a NAD for that value, so the commander updates 106 the value and the process starts again, sending 101 the new value through the bus. Since the responders with no match remain receptive, said further value will be compared as before.

If a responder finds a match while checking 112 for matches, the responder applies or transmits 104 on the bus at least a part of its ID, which is received by the commander as a signal that a responder has been identified. The commander processes the received data, and then checks 115 said data for collision. This can be done by comparing the received data from the responder or responders with an expected value. In some embodiments, the responders send 105 a CRC code with their ID. The communication frame may comprise a CRC field, for example, which can also be used to check 115 for collision. In case of collision, the commander updates 106 the value and the process restarts again with query using the new value, and the responders that have not been assigned with a new address continue 103 being receptive.

In case of no collision, the commander assigns 107 a node address or NAD to the responder that transmitted (part of) its ID to the commander. The responder sets this NAD as its new address, for example by storing the NAD in a memory. Then the responder stops 108 being responsive for the rest of the procedure of address assignation, thus exits the method. The responder is ready to be used in the network under normal functionality. The commander, on the other hand, may also store in the memory the used NAD and optionally link it to the received (part of) ID. Then it is checked 118 if more values remain. If there are still values to be sent, the commander updates 106 the value and transmits 101 the new value as before, starting the process over. Otherwise, the process ends 109. The commander may have information of how many responders are attached to the bus, and if the commander sets NADs to all responders, then it is considered that no more values are to be sent, and the process may stop. Other steps may be included. In some embodiments, additional steps of assigning temporary NADs are included. In some embodiments, an error can be signalized and the process aborted if the maximum number of values is used and there are still nodes without a NAD in the bus. In some embodiments, the value is dynamic and can be changed accordingly with the number of collisions, to reduce the number of collisions if there are too many, or to speed up the overall process, if the number of collisions is very low (meaning that the IDs of the responders are sufficiently different).

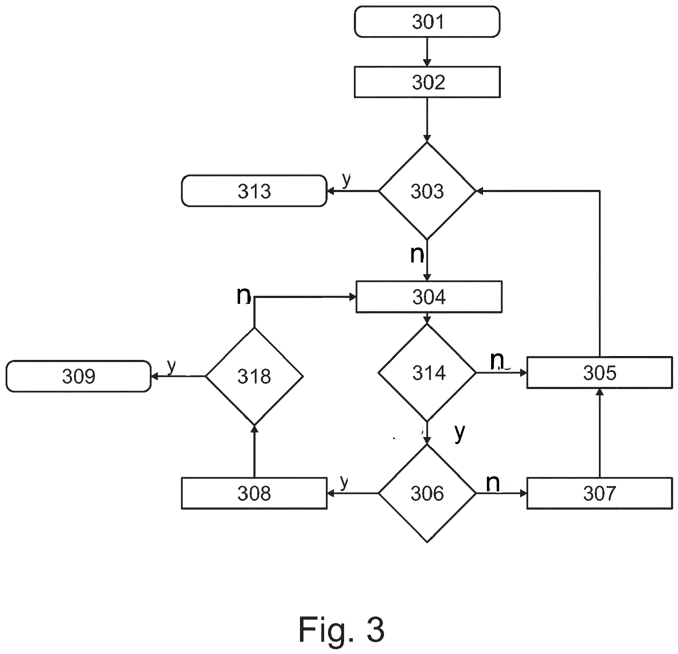

Fig. 3 describes an exemplary arbitration algorithm of embodiments of the present invention in detail.

Herein, the ID of the responders is established and coded. The commander sends each value at a first position of the ID, one by one. The first position of the ID may be the lower sections, where the IDs of different responders differ the most (for example, value[0] of the ID is compared in the zero position). The data is sent in a communication frame, with a header and an instruction. The commander for example can send a frame instructing a responder to send their IDs if the values for that position coincide with the values of their own ID.

The values may be sent in fields of different sizes, for example bit by bit, nibble by nibble, or byte by byte. A bit-wise arbitration uses the values bit by bit to compare for each position, a nibble-wise arbitration uses the values in nibbles for each position of the ID. For example, an 8-bit ID will have two positions, and the commander would send each value of a nibble to the responders, which compare the received value with the nibble at the corresponding position of their ID.

In some embodiments, the type of arbitration may be dynamically adapted (first nibble by nibble, then byte by byte...). Other units could be used.

When all values of a position are checked, or if a collision is encountered, the commander requests to check the following position. In some embodiments where the position is n (n being different from zero), all values from the n-th position to the zero position are requested to be compared.

The arbitration sequence is started 301 by initiating 302 the variables shown in Table I on the commander. Initiating 302 may be done with the command e.g. *nad=0; position=0; value[maxpos:0]=0.*

**Table I - Variables started on the commander.**

| Name | Description | Init value | |
|---|---|---|---|
| *nod* | Node address of the responder nodes | | 0 |
| *position* | Current position of the ID to be inspected, e.g., bit, nibble, or byte | | 0 |
| *value[position:0]* | Values at positions (vector) | | 0 |
| *maxpos* | The maximum no. of positions to be tackled during the arbitration. Here the indices are starting from 0, so 0 means one position to be investigated | E.g., for an 8byte ID: | |
| | | 7 - byte-wise | |
| | | 15 - nibble-wise | |
| | | 64 - bit-wise | |
| *maxval* | The maximum value at a position | 255 - byte-wise | |
| | | 15 - nibble-wise | |
| | | 1- bit-wise | |

Every time a value at the position 0 is set, it is checked 303 whether the value reached the predetermined maximum value (e.g. *value[0]==maxval?*) or not, and if the maxval is not reached, the arbitration continues. When the arbitration continues, the commander requests 304 a comparison of all values (*query responders position, value*[*position*:0]. In some embodiments, all the values from the current position to the position 0 are requested. For example, at *position* == 0, the value[0] is requested, whereas if *position* == 3, all values from *position* 3 to *position* 0 are requested to be compared (*value*[3:0]).

The commander checks 314 if a response is received.

In the case there is no match among the connected responders, this query does not result in a match to the ID of any responder, none of the responders send their ID so the commander receives no response. The commander updates 305 the value at the current position. As long as the maximum value at this position (1 for bit-wise, 15 for nibble-wise, and 255 for byte-wise arbitration) has not been reached, the value at the current position is incremented. Otherwise, all values and the current position, except for the 0-th position, are reset to zero. For example the algorithm may be *if(value[position]<maxval) {value[position]++} else {position=0; value[maxpos:1]=0;}.*

Then it is checked 303 whether the maximum value is reached, as before. If it has been reached, the procedure ends 313.

In some embodiments, the method provides in the instructions the information unit used for the transmission, for example bit-wise, nibble-wise, byte-wise... Since the transmission can be made in bits, nibbles or bytes, the time to assign NADs to the responders can be reduced since there is no need to transmit more than a few bits rather than a long sequence or the whole ID number.

In some embodiments, the transmission mode can change from bit-wise to nibble-wise and/or to byte wise, or vice versa, depending on a balance between the number of collisions and the time it takes to identify responders. This flexibility of the granularity of the identification process advantageously allows optimization of timing.

In case there is at least one match among the connected responders, a response is received by the commander. The commander checks 306 the expected data to confirm that there was no collision. In some embodiments, the commander may check alternatively or additionally the CRC of the received responder message.

If the check shows no collision between multiple responses has occurred, a single responder was answering. Consequently, the commander can assign 307 the current NAD to the responder that sends the last message. Then the commander updates 305 the value at the position as before; as long as the maximum value at this position (1 for bit-, 15 for nibble-, and 255 for byte-wise arbitration) has not been reached, the value at the current position is incremented. Otherwise, all values, except for the 0-th position, are reset to zero and the current position is set to zero too.

On the other hand, if multiple matches among the responders occurred, the commander provides 308 a further position, e.g. increases the position. In some embodiments, the commander increases the 'position' (*position++*). Then it is checked 318 that the position is or not larger than the maximum position (*"position > maxpos?"*). If the position is larger than the maximum allowed positions, the arbitration can be declared 309 erroneous, since a collision still occurred at the highest position. Otherwise, the commander continues 304 to query the values *value[position:0]* from the responders.

In the embodiments described, the commander sends, for a given position, the values in increasing order for the current position and each of the earlier positions in the ID space, and the position is increased when all the values for that position have been sent, or if a collision takes place (so, if two responders identify the same values for the same positions in their ID). The skilled person could use different conditions and different orders. The commander may follow other orders to check positions, for example on a decreasing order instead of increasing, or positions following a different order, or even in random order, taking into account that there is no need to check positions whose values did not result in collision. Analogously, the commander may follow different ways of sending values to the responders for comparison, e.g. in increasing or decreasing order; as before, values that did not result in collision for a given position do not need to be sent again, thus providing faster ID checks.

In other methods of ID reading, such as CAN arbitration, the nodes send their IDs and it is checked which node wins arbitration by checking whether each bit is recessive or dominant, and repeating the process for every remaining node, which may take a long time. The process in accordance with embodiments of the present invention may take very short, e.g. under half a second, e.g. few milliseconds, because relatively large portions of each responder's ID can be checked in each message, even in a dynamic way.

In the following, an embodiment of the present invention is explained in detail with an example of node assignment by a commander on a bus with 4 responders. The responders include an ID with 16 positions. Table II contains said IDs of the 4 responders, shown as nibbles from position 0 to position 15. The first column on the left represents the responders from I to IV, i.e., responder I is in the first line, responder II in the second and so forth.

**Table II - responders I to IV with 16-bit IDs in 16 positions, from 0 to 15.**

| | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|
| I | 0 | 0 | 1 | 0 | 6 | 8 | 5 | 6 | 7 | E | 0 | 3 | 5 | 0 | 1 | 8 |
| II | 0 | 0 | 1 | 0 | 6 | 8 | 5 | 6 | 7 | E | 0 | 2 | 4 | F | 1 | 8 |
| III | 0 | 0 | 1 | 0 | 6 | 8 | 5 | 6 | 7 | E | 0 | 2 | 5 | 0 | 1 | 8 |
| IV | 0 | 0 | 1 | 0 | 6 | 8 | 5 | 6 | 7 | E | 0 | 3 | 4 | F | 1 | 8 |

Table II also shows marked cells denoting a collision at that position as shown in queries 9, 11, 12 and 18, because more than one responder has identical values.

In the first query (see the list of queries below), the commander checks the last position, thus position 0x00, for the first value, i.e. 0. There is no response since no ID starts with 0 (query 1 in the list below). The following queries 2 to 8, checking values from 0x1 to 0x7, result in no response either. However, when the value 0x8 is reached (query 9, see below), a collision is detected since all four responders have that value at that position. Thus, the following values at the next position of the ID are checked, in this case 0x01. There is a collision at 0x18 (Table II shows the two first positions highlighted for all responders, since all nodes have the two first values as 18, see query 11). The following position 0x02 is checked, so the following query is 0x018. The table shows that responders I and III have such values 0x018, so there is still a collision, see query 12. The next position of their ID is checked, namely 0x03, so the values 0x0018, 0x1018, 0x2018... (see query 13, 14, etc.). At query 18, when the value 0x5018 is reached, responders I and III again send a signal since both have the values 0x5018 (see Table II, highlighted position 3), so again there is a collision. The following position 0x04 is checked, starting 0x05108. Finally, in query 21, the commander queries the value 0x25018, and responder III transmits to the commander, see Table II, showing that the ID of responder III includes 2 in the fourth position, 5 in the third, 0 in the second, 1 in the first, and 8 in the position 0 (thus 0x25018). Since responder III is the only responder transmitting, there is no collision. In this embodiment, responder III sends its ID, the commander identifies the responder, so the found device can be assigned with a NAD. Responder III stops being responsive during the rest of assignment. The commander may continue with the position after 0x25018, namely the position 0x35018, which coincides with the corresponding five positions of the ID for the responder I, so another device is found (query 22). Responder I stops responding to further queries.

The commander continues sending further queries, advancing the positions in the ID when required, until again a collision is found in 0x8 (query 35). The position is increased as before, and another collision takes place at 0x18 (query 37). These two collisions cannot be caused by responders I or III, since these have already been identified. The procedure continues with collisions for the ID values of 0xF18 position 0x02 (see query 53), and again in the position 0x03 for the ID value 0x4F18 (see query 58), so the position in increased again at 0x04. At query 61, the value 0x24F18 is checked by the remaining responders II and IV. Only responder II has a positive check and transmits to the commander. The responder II is identified. Responder IV is identified afterwards (query 62) for the value 0x34F18. The full arbitration cycle of this example is listed below:
1. query 0x0 -> no response
2. query 0x1 -> no response
3. query 0x2 -> no response
(...)
7. query 0x6 -> no response
8. query 0x7 -> no response
9. query 0x8 -> collision detected at val 0x8 pos 0x00 -> go to pos 0x01
10. query 0x08 -> no response
11. query 0x18 -> collision detected at val 0x1 pos 0x01 -> go to pos 0x02
12. query 0x018 -> collision detected at val 0x0 pos 0x02 -> go to pos 0x03
13. query 0x0018 -> no response
14. query 0x1018 -> no response
(...)
17. query 0x4018 -> no response
18. query 0x5018 -> collision detected at val 0x5 pos 0x03 -> go to pos 0x04
19. query 0x05018 -> no response
20. query 0x15018 -> no response
21. query 0x25018 -> found device ID: 0x001068567e025018
22. query 0x35018 -> found device ID: 0x001068567e035018
23. query 0x45018 -> no response
(...)
28. query 0x95018 -> no response
29. query 0xa5018 -> no response
30. query 0xb5018 -> no response
(...)
34. query 0xf5018 -> no response
35. query 0x8 -> collision detected at val 0x8 pos 0x00 -> go to pos 0x01
36. query 0x08 -> no response
37. query 0x18 -> collision detected at val 0x1 pos 0x01 -> go to pos 0x02
38. query 0x018 -> no response
39. query 0x118 -> no response
40. query 0x218 -> no response
(...)
47. query 0x918 -> no response
48. query 0xa18 -> no response
(...)
52. query 0xe18 -> no response
53. query 0xf18 -> collision detected at val 0xf pos 0x02 -> go to pos 0x03
54. query 0x0f18 -> no response
55. query 0x1f18 -> no response
56. query 0x2f18 -> no response
57. query 0x3f18 -> no response
58. query 0x4f18 -> collision detected at val 0x4 pos 0x03 -> go to pos 0x04
59. query 0x04f18 -> no response
60. query 0x14f18 -> no response
61. query 0x24f18 -> found device ID: 0x001068567e024f18
62. query 0x34f18 -> found device ID: 0x001068567e034f18
63. query 0x44f18 -> no response
(...)
67. query 0x84f18 -> no response
68. query 0x94f18 -> no response
69. query 0xa4f18 -> no response
70. query 0xb4f18 -> no response
(...)
74. query 0xf4f18 -> no response
75. query 0x8 -> no response
76. query 0x9 -> no response
77. query 0xa -> no response
(...)
82. query 0xf -> no response
Arbitration completed after 82 queries, thereof 8 collisions and 70 no responses => exit

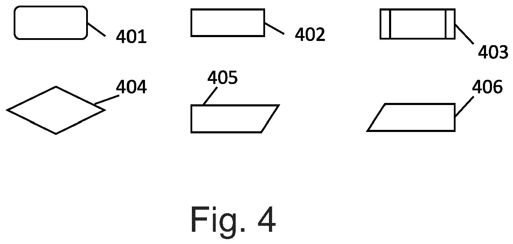

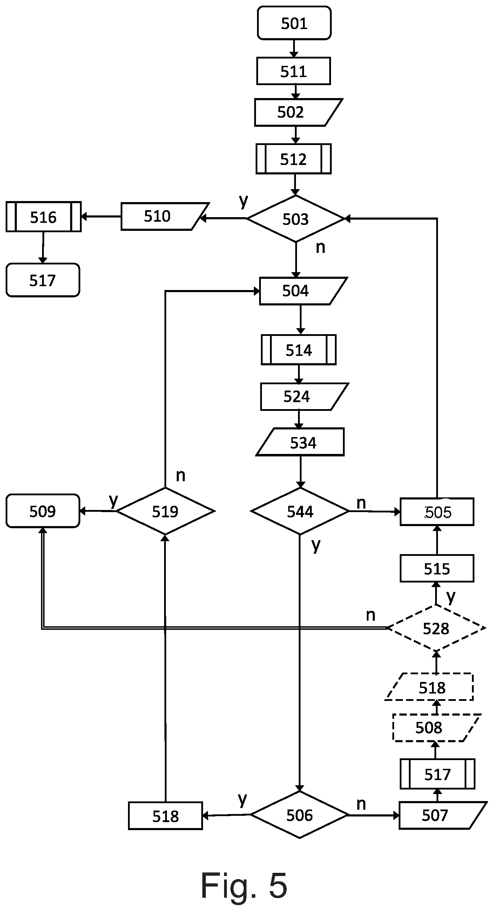

A further detailed description of the algorithm is explained below with reference to Fig. 4 and Fig. 5 as a flow chart. Fig. 4 shows the legend with the boxes, wherein the top left box 401 means start/stop, the top middle box 402 indicates a process, the top right box 403 means process at responders, the bottom left box 404 means decision (yes or no, indicated by "y","n" respectively in the drawings), the bottom middle box 405 indicates a commander message and process, and the bottom right box 406 indicates a responder message and process. Fig. 5 shows the actions between the commander and the responder(s). Upon start 501, the algorithm initializes 511 the following variables shown in Table III. In this specific implementation, the values 0, 1, 2 and 3 correspond to specific addresses for broadcasting reasons, so its initial value for the PRE_NAD is 4 (*PRE_NAD=4; position=0;value[maxpos:0]=0*).

**Table III-Initialization of variables.**

| Name | Description | Initial value |
|---|---|---|
| PRE_NAD | Preliminary node address for the responder nodes | 4 |
| position | Current position of the ID to be inspected; e.g., bit, nibble, or byte | 0 |
| value[position:0] | Values at positions (vector) | 0 |
| maxpos | The maximum no. of positions to be tackled during the arbitration. Here the indices are starting from 0, so 0 means one position to be investigated | E.g., for an 8byte ID: |
| | | 7 - byte-wise |
| | | 15 - nibble-wise |
| | | 64 - bit-wise |
| maxval | The maximum value at a position | 255 - byte-wise |
| | | 15 - nibble-wise |
| | | 1- bit-wise |

The commander initially requests 502 all responders to set their NAD to 0xFE (*request responders to set NAD=0xFE),* which means that they are ready to receive a new NAD from the commander. This is done by sending the position 0xFE. Consequently, all responders set 512 their NAD to 0xFE (*responders set NAD=0xFE*). It is noted that, 'C2R' and 'R2C' means a communication from the commander to the responder and from the responder to the commander, respectively. In some embodiments, and in this particular example the commander also initiates an R2C message by sending the header of R2C message.

Next, the value at the lowest position is compared 503 with the maximum value (*value[O]==maxval?).* Unless the value at the lowest position is less than the maximum value (1 for bit-wise, 15 for nibble-wise, and 255 for byte-wise arbitration), the commander requests 504 a compare of all values (*#2 C2R: send position and volue[position:0] to responders*) . E.g., at *position* == 0, the *value*[0] is requested, whereas if *position* == 3, all values from *position* 3 to *position* 0 are requested to be compared (*value*[3:0]). The responders do 514 so, and if this query leads to a match to any of the responders' IDs, the concerned responders set their NAD to the intermediate value of 0xFD. Otherwise, the NAD remains 0xFE (*responders compare value[position:O to their ID; if equal set NAD=0xFD; else set NAD=0xFE*).

In the next step, the commander requests 524 responders whose NAD is 0xFD to respond (*#2 R2C header: query matching responders ID*). This prompts any responder to send 534 their ID (*#3 R2C: matching responders send their ID*).

Then it is checked 544 whether or not a response was received. If the query did not lead to a match before, no response will be received by the commander on the request message #3. The commander updates 505 the value. For example, as long as the maximum value at the current position (1 for bit-, 15 for nibble-, and 255 for byte-wise arbitration) has not been reached, the value at the current position is incremented. Otherwise, all values, except for the 0-th position, are reset to zero and the current position is set to zero (*if (value[position]<maxval {}value[position]++} else {position=0; value[maxpos:1]=0;}*).

In case checking 544 results in a positive result, there is at least one match among the connected responders, and a response will be received by the commander. The commander checks 506 the CRC of the responder message and / or checks the responder message (e.g. by comparing the responder message to the expected message).

In case no collision between multiple responses has occurred, the commander can assign 507 the matching responder to set its NAD to the current PRE_NAD (*#4 C2R header: request responder with NAD==0xFD to set NAD=PRE_NAD).* The responder follows 517 the instruction (*matching responder sets its NAD=PRE_NAD*). Optionally, in some embodiments, the commander might check 508 the correct address by requesting the ID from the node which obtained the recent NAD (#5 *R2C header: request ID from node with NAD==PRE_NAD*). Thus, the node with the corresponding PRE_NAD being NAD sends 518 its ID (#5 *R2C: node with NAD==PRE_NAD sends its ID;).*

Then, the received ID is compared 528 with the ID previously received, as sent 534 by the responder (the only responder that sent it, since the checking 506 for collision resulted in no collision). If the ID differs from the previously received one, the arbitration might abort 509 with an error indication. This option is indicated by the dashed boxes in Fig. 5. Otherwise, the *PRE_NAD* is incremented 515 to enable addressing for the next node afterwards (*PRE_NAD++;*). In this case the value is updated 505 as before, thus as long as the maximum value at the current position (1 for bit-wise, 15 for nibble-wise, and 255 for byte-wise arbitration) has not been reached, the value at the current position is incremented. Otherwise, all values, except for the 0-th *position,* are reset to zero and the current position is also set to zero (*if (value[position]<maxval {}value[position]++} else {position=0; value[maxpos:1]=0;}*).

Then it is checked 503 that *maxval* at the 0-th *position* is reached (*value[0]==maxval?*). If not, the sequence restarts. Otherwise, the commander ends the arbitration, by requesting 510 the responders to reassign their *NAD* (*#6 C2R: reassign NAD*). In order words, if maxval at the 0-th position is reached, the network address (NAD) space is completely filled with assigned network addresses (NAD). The responders assign the new NAD 516 and the arbitration ends 517.

In case checking 506 for collision is positive, there is collision, and multiple matches among the responders occurred. The *position* needs to be updated, e.g. the position is incremented 518 (*position ++;*). It is checked 519 afterward whether or not the position is larger than the maximum allowed positions. If so, the arbitration can be declared 509 erroneous since a collision still occurred at the highest position. Otherwise, the commander continues to query by requesting 504 a comparison of the values from the responders, as explained earlier (*#2 C2R: send position and* value[position:0].

It is noted that the method may change the type of arbitration. For example, the arbitration may change to a slower arbitration with smaller steps, e.g. from nibble- to byte-wise, if the number of collisions is too high. Alternatively, if the number of collisions is under a predetermined threshold, the method may also change the arbitration to optimize timing.

The method in accordance with embodiments of the present invention successfully overcomes the timing constraints associated with oscillator tolerance. The method does not require the complete addressing space, or even a large portion thereof, to be exercised, resulting in a significant time advantage. The use of RC oscillators with a +/-3% precision is validated, demonstrating cost savings without compromising the communication process. The algorithm was shown to be efficient in assigning NADs to all participants in a minimal amount of time.

The commander and the plurality of responders of the network are adapted for processing a frame protocol for arbitration in accordance with the method of any one of the previous claims. The commander may be adapted to transmit a communication frame comprising at least a header and instruction. Each responder is adapted to transmit at least a portion of its own identification number. In some embodiments, each frame comprises a header and an instruction, followed by data. The responders are programmed to assign a temporary NAD and send their ID to the commander. A CRC code may also be sent in one of the data fields. The commander is programmed to send the responder with the temporary NAD a new NAD. The commander may also be equipped to store the ID of the responder assigned with the new NAD. The responder is also equipped to store the new NAD assigned by the commander.

Because of the use of values with a limited length (and not a full ID length), this method allows arbitration for a short period, e.g. a few milliseconds. It is a further advantage that the responders may comprise oscillators typically less accurate, and thus more inexpensive, than the oscillator of the commander. It is a further advantage that no additional hardware is required.

The following shows different exemplary frames for different types of differential auto-addressing. The frame includes a header, e.g. a header compatible with MeLiBu systems. The instruction comprises a value indicating the type of arbitration that the network will follow. In some embodiments the instruction may require Byte Arbitration as 0xEF01, Nibble Arbitration 0xEF02 and Bit Arbitration 0xEF03. The exact implementation of values may be different, however the programming of all nodes in the network should be compatible with each other.

The purpose of this command is to provide the arbitration position and slot-value to the node. A Differential Auto addressing request command has the following structure and shall be sent as broadcast frame, see Table IV for different frames depending on the type of differential auto-addressing:

**Table IV - Different frames for different types of auto-addressing.**

| Header | Inst./SID | data[0]/PCI | data[1] | data[2] | data[3] | (...) | data[9] | data[x] |
|---|---|---|---|---|---|---|---|---|
| | 0xEF01 | 0x02-0x09 | End position | Slot-Value0 | Slot-Value1 | (...) | Slot-Value7 | Unused |
| | 0xEF02 | 0x02-0x09 | End position | Slot-Value0 | Slot-Value1 | (...) | Slot-Value7 | Unused |
| | 0xEF03 | 0x02-0x09 | End position | Slot-Value0 | Slot-Value1 | (...) | Slot-Value7 | Unused |

The *End Position* specifies until which byte the ID (for example, a CHIP-ID) shall be compared against the *Slot-ValueX.*

Byte Arbitration: The value can be different within the range of 0 to 7. In this example, the CHIP-ID is a 64-bit unique value and has 8 possible *Position* values using bytes. The *Slot-ValueX* is used by the responder to compare the byte positions from 0 until *End Position.* The other bytes are discarded and may not be used for the comparison.

Nibble Arbitration: Each *Slot-ValueX" contains up to 2 nibbles and the value for each nibble can be different within the range of 0 to 15. The CHIP-ID is a 64-bit unique value and has 16 possible *Position* values using nibbles. The *Slot-ValueX* is used by the responder to compare the nibble positions from 0 until *End Position.* The other nibbles may be discarded and not used for the comparison.

Bit Arbitration: Each *Slot-ValueX" contains up to 8 bits. The *Slot-ValueX* is used by the responder to compare the bit positions from 0 until *End Position.* The other bits may be discarded and not be used for the comparison.

The *PCI* value specifies how many *Slot-ValueX* shall be used. For example: *PCI* == 3 means that *Slot-ValueO* and *Slot-Value1* shall be used. The *End Position* and the number of used *Slot-ValueX* should not overflow the maximum possible CHIP-ID length of 64 bit.

Using the value 0xFF for *Position* is resetting the NAD to the default NAD and is used to indicate the Start of the AutoAddressing sequence. The corresponding slave will enter the auto-addressing mode and temporarily set its NAD to 0xFE.

In case the *Slot-ValueX* is matching the CHIP-ID value at *End Position* the node will set its NAD to 0xFD. The response message for the Differential Auto addressing command may contain the following data shown in Table V and can be requested from the node with NAD 0xFD only.

**Table V- Data of the message as response to the auto-addressing command (R2C)**

| Head. | Inst. | data[0] | data[1] | data[2] | data[3] | ... | data[6] | data[7] | data[8] | data[9] |
|---|---|---|---|---|---|---|---|---|---|---|
| | 0xFF01 or 0xFF02 or 0xFF03 | 0x09 | Reser. | CHIP ID LSB | CHIP ID | ... | CHIP ID | CHIP ID MSB | Supplier ID LSB | Supplier ID MSB |

It is noted that data [3] to data [6] the corresponding bits of the CHIP ID are transmitted, although the columns corresponding to data[4] and data[5] are not shown in the table to save space. The following explains the NAD-assigning command, for setting NAD from the CHIP ID. The data in the instruction field may be 0xEE01. The purpose of the command is to assign a responders node address using its chip ID information. The chip ID information was transferred by the responder in the first round of the auto-addressing under use of the above-described arbitration method and stored at the commander in e.g. a reference table, e.g. in a NV memory of the commander. In some embodiments, the commander may determine the physical position of the responder using existing methods. Then, the commander can use this command to assign the NAD to the responder. The responder might store that NAD in an internal memory. If the responder comprises e.g. an NV memory, it can be stored there, what provides the advantage that the NAD assignment must only be done once. The NAD assignments may be done once at the setup of the bus if the memory modules of the commanders and/or responders are not volatile. In some embodiments, the NAD assignments may be done at each power on of the system. This allows the use of volatiles memories, for example the responder(s) may comprise only RAM or registers, which lose their contents at power down.

A Set NAD from CHIP ID command has the structure in Table VI. As before, the columns for repetitious information have been deleted for spacing reasons.

**Table VI - Frame corresponding to 'set NAD' command.**

| Header | Instruction | data[0] | data[1] | data[2] | data[3] | (...) | data[6] | data[7] | data[8] | data[9] |
|---|---|---|---|---|---|---|---|---|---|---|
| | 0xEE01 | 0x07 | new NAD | CHIP ID LSB | CHIP ID | (...) | CHIP ID | CHIP ID MSB | not used | not used |
| | 0xEE01 | 0x09 | new NAD | CHIP ID LSB | CHIP ID | (...) | CHIP ID | CHIP ID MSB | Supplier ID LSB | Supplier ID MSB |

The field data[1] in the frame (*new NAD* ) contains the new NAD, which shall be assigned to the node whose CHIP ID matches the CHIP ID (sent by the commander) within data[2:7], and the supplier ID if provided.

The response message of the responder for the Set NAD from CHIP ID will contain the data in Table VII.

**Table VII - R2C frame as response to 'set NAD' command.**

| Header | Instruction | data[0] | data[1] | data[2] | data[x] |
|---|---|---|---|---|---|
| | 0xFE01 | 0x01 | Address | reserved | user defined |

The response must be requested by the newly assigned NAD and the Address field must match the newly addressed NAD. The data[2] is not used yet and is reserved for future usage.

In embodiments of the present invention, the method allows reassignment of an address to a responder. The following command is used to assign new NAD to a responder which already has a NAD (Reassign NAD 0xEE0A + 0xEE0B).

This command is used, e.g., in step #D in the sequence in Fig. 4. The responder already has the NAD=0xFD, and the commander re-assigns it to a new preliminary NAD.

A Reassign NAD command has the following structure and consists of a set of 2 frames:
The first (commander to responder) C2R frame contains the new NAD, which shall be used with the reception of the second C2R frame, see Table VIII.

**Table VIII - C2R frame for reassigning NADs.**

| Header | Instruction | data[0] | data[1] | data[x] |
|---|---|---|---|---|
| | 0xEE0A | 0x01 | new NAD | not used |

This first frame is sent to each node individually. The response message for the Reassign NAD will contain the data in Table IX.

**Table IX - R2C frame for reassigning NADs.**

| Header | Instruction | data[0] | data[1] | data[x] |
|---|---|---|---|---|
| | 0xFE0A | 0x01 | new NAD | user defined |

The second frame is used as a trigger to discard the current used NAD and assign the *new NAD.* This frame in Table X should be sent as a broadcast frame to update all NADs simultaneously.

**Table X - Broadcast frame to update all NADs.**

| Header | Instruction | data[0] | data[1] | data[2] | data[3] | data[x] |
|---|---|---|---|---|---|---|
| | 0xEE0B | 0x03 | 0x02 | 0x02 | 0x55 | not used |

The response message for the Reassign NAD contains the data shown in Table XI.

**Table XI - R2C message for reassigning NAD.**

| Header | Instruction | data[0] | data[1] | data[2] | data[x] |
|---|---|---|---|---|---|
| | 0xFE0B | 0x02 | new NAD | prev. NAD | user defined |

The response must be requested by the newly assigned NAD and the Address field must match the newly addressed NAD.

## Claims

1. A method of assigning an address on a network comprising at least one commander and a plurality of responders, the commander and the responders connected to a wired bus, wherein each responder comprises an identification number (ID) of a predetermined length, wherein the identification numbers of the plurality of responders form an ID space,
the method comprising assigning by the commander an address (NAD) to each responder so that each responder is assigned with an address, wherein the addresses of the plurality of responders form a set, the set forming a network addressing space, wherein the ID space is larger than the network addressing space, the method further comprising:
- providing a query of a sequence thereof, wherein the commander sends (101) on the bus at least a value representative of a subset of bits of the ID space,
- receiving (102) the value by the responders and checking (112) for a match, wherein a responder that finds no match remains (103) receptive for a further value, wherein a responder that finds a match subsequently transmits (104) on the bus at least a
part of their identification number (ID) ,
wherein subsequently the commander checks (115) for collisions on at least a part of the identification number (ID) received by the commander, so that
- if a collision is detected, the responders remain (103) receptive for a further value, and the commander starts a further query of the sequence by selecting (106) a further value different from the current value and transmits on the bus at least a value representative of the further value,
- and if no collision is detected, the commander assigns (107) the address (NAD) to the responder that transmitted last the at least a part of their identification number (ID), subsequently wherein the responder stops (108) being receptive for any further value, and subsequently the commander starts a further query of the sequence by selecting (106) a further value different from the current value and transmits the value representative on the bus for the remaining responders.

2. The method of the previous claim wherein transmitting at least part of the identification number (ID) by the responder comprises transmitting a bit, a nibble or a byte of its identification number.

3. The method of any one of the previous claims wherein transmitting the message by the commander comprises transmitting a field indicating whether the responder shall transmit a nibble or a byte of its identification number.

4. The method of claim 2 or 3 wherein the transmission of the identification number is done with a bit or with a nibble, further wherein the transmission is switched to the use of bytes, if the number of collisions detected during assignment of multiple responders surpasses a predetermined threshold.

5. The method of any one of the previous claims wherein the responder that finds a match further transmits (105) a Cyclic Redundance Check (CRC) value, optionally further wherein the commander checks for collisions in reference to the Cyclic Redundance Check value.

6. The method of any one of the previous claims wherein transmitting at least a value representative of a subset of bits of the ID space comprises selecting from a portion of the ID space with high entropy.

7. The method of any one of the previous claims wherein the addresses are assigned to each responder of the network the first time the network powers up, optionally every time the network powers up.

8. The method of any one of the previous claims further comprising memorizing an identification number received by the commander.

9. The method of any one of the previous claims wherein the address received by the responder is stored in a memory.

10. The method of any one of the previous claims wherein sending the value representative of a subset of bits of the ID space comprises sending a value in one or more positions of the ID space in a sequence, wherein for the first position of the ID space, the value corresponding to the first position is sent, and wherein for the n-th position of the ID space, the value for the n-th position and for each position below n are sent.

11. The method of the previous claim wherein the network addressing space comprises 4 addresses reserved as broadcast addresses for all the receivers.

12. The method of any one of the previous claims wherein the commander receives and/or stores the number of responders connected to its network and provides a set of network addresses with the same number of addresses as the number of responders.

13. A system comprising a commander and a plurality of responders connected to a communication bus,
the commander and responders being adapted for processing a frame protocol for arbitration in accordance with the method of any one of the previous claims, wherein each responder is adapted to transmit at least a portion of its own identification number.

14. The system of the previous claim wherein the responder comprises a semiconductor processing chip, wherein the identification number comprises a lot number of a semiconductor wafer lot, and/or the coordinates of the position of the chip in the wafer.

15. The system of any one of claims 13 or 14 wherein at least one responder comprises an oscillator less accurate than the oscillator of the commander.
